# EUROPÄISCHE PATENTSCHRIFT

(11) **EP 3 203 615 B1**
(45) Veröffentlichungstag und Bekanntmachung des Hinweises auf die Patenterteilung: **26.05.2021**
(21) Anmeldenummer: 16206662.5
(22) Anmeldetag: 23.12.2016
(51) Int. Cl.: H02K 7/106, E06B 9/322, E06B 9/262, E06B 9/72, E06B 9/84

(54) **ANTRIEBSVORRICHTUNG**
DRIVE DEVICE
GROUPE PROPULSEUR

(30) Priorität: 04.02.2016 DE 202016100560 U; 20.10.2016 DE 202016105907 U
(43) Veröffentlichungstag der Anmeldung: 09.08.2017
(73) Patentinhaber: elero GmbH, 72660 Beuren (DE)
(72) Erfinder: Wagner, Friedhelm, 72639 Neuffen (DE)
(74) Vertreter: Ruckh, Rainer Gerhard

(56) Entgegenhaltungen:
- EP-A1- 0 783 072
- DE-A1-102009 042 607
- JP-B2- 3 183 409
- US-B1- 6 794 778

## Beschreibung

Die Erfindung betrifft eine Antriebsvorrichtung für ein Stellsystem.

Derartige Antriebssysteme werden insbesondere für Stellsysteme in Form von Sonnenschutzsystemen eingesetzt.

Derartige Antriebsvorrichtungen weisen einen Elektromotor auf, mittels dessen ein Behang ein- beziehungsweise ausgefahren werden kann. Dieses Verfahren erfolgt zwischen einer oberen Endposition, in der der Behang vollständig eingefahren ist, und einer unteren Endposition, in der der Behang vollständig ausgefahren ist. Sonnenschutzsysteme, die mit derartigen Elektromotoren betrieben werden, können typischerweise als Jalousien, Rollläden oder auch Markisen ausgebildet sein.

Um den Behang in einer gewünschten Position zu fixieren, ist dem Elektromotor eine Bremse zugeordnet, die dafür sorgt, dass der Elektromotor in einer vorgegebenen Stellung verbleibt.

Bei bekannten Sonnenschutzsystemen werden dabei sogenannte Flachbremsen eingesetzt. Bei einer derartigen Flachbremse handelt es sich um eine magnetische Bremse, die zwei Bremselemente aufweist, die durch mechanische Federkräfte mit einer Anpresskraft aneinander anliegen und so eine Bremswirkung ausüben. Diese Bremswirkung kann durch Magnetkräfte aufgehoben werden, die die Bremselemente gegen die Federkräfte auseinander ziehen. Soll ein Bremsvorgang ausgeführt werden, werden die Magnetkräfte abgeschaltet, so dass die Bremselemente mittels der Federkräfte gegeneinander geführt werden. Nachteilig hierbei ist, dass das Gegeneinanderführen der Bremselemente zu einer unerwünschten Geräuschentwicklung führt.

Alternativ können als Bremsen auch Hysteresebremsen eingesetzt werden. Derartige Hysteresebremsen arbeiten zwar geräuschlos, haben jedoch bedingt durch ständige Ummagnetisierungsvorgänge zur Erzeugung einer Bremskraft, einen erhöhten Leistungsbedarf.

Die EP 0 783 072 A1 betrifft einen Behang für ein Fenster. Dem Behang ist eine Antriebsvorrichtung mit einem reversierbaren Motor zugeordnet, mittels derer der Behang motorisch an einer Welle auf- und abgewickelt werden kann. Die Antriebsvorrichtung umfasst weiterhin eine magnetische Bremse, die eine feststehende magnetische Scheibe und eine drehbare magnetische Scheibe aufweist.

Die DE 10 2009 042 607 A1 betrifft einen Rotor für eine elektrische Maschine, wobei der Rotor ein Blechpaket und Permanentmagnete aufweist, wobei das Blechpaket Magnettaschen aufweist, wobei zumindest ein Permanentmagnet in zumindest einer der Magnettaschen zumindest an zwei unterschiedlichen Materialien angrenzt.

Die JP 3183409 B2 betrifft eine Antriebsvorrichtung mit einer Anordnung von zwei konzentrischen Ringen, in welchen jeweils zwei Magnete um 180° zueinander versetzt angeordnet sind.

Die US 6,794,778 B1 betrifft eine Antriebsvorrichtung für Behänge an Fenstern. Die Vorrichtung umfasst eine Bremsanordnung mit einer ersten stationären Anordnung von diskreten Magneten und einer zweiten rotierenden Anordnung von diskreten Magneten.

Der Erfindung liegt die Aufgabe zugrunde, eine Antriebsvorrichtung der eingangs genannten Art bereitzustellen, die bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Antriebsvorrichtung für ein Stellsystem, mit einem Elektromotor, wobei durch eine Drehbewegung dessen Rotors ein Stellelement ein- oder ausgefahren wird. Eine dem Elektromotor zugeordnete Bremse weist eine mit dem Rotor des Elektromotors mitrotierende erste Aufnahme mit einem ersten Ring aus magnetisierbarem Material auf, wobei dieser Ring eine erste Anordnung von in dessen Umfangsrichtung beabstandeten, diskreten magnetisierten Bereichen aufweist. Eine stationäre zweite Aufnahme weist einen zweiten Ring aus magnetisiertem Material auf, wobei dieser Ring eine zweite Anordnung von in dessen Umfangsrichtung beabstandeten, diskreten magnetisierten Bereichen aufweist. Bei Stillstand des Elektromotors sind magnetisierte Bereiche der ersten und zweiten Anordnung in Abstand gegenüberliegend angeordnet und generieren damit ein Rastmoment für den Elektromotor. Die Höhe des Rastmoments ist durch die Anzahl und die Größen der magnetisierten Bereiche in den Ringen vorgebbar.

Die erfindungsgemäße Antriebsvorrichtung kann für Stellsysteme aller Art, insbesondere im Gebäudebereich eingesetzt werden. Beispiele hierfür sind Stellsysteme für Fassadenelemente, Schranken oder Parkpoller. Besonders vorteilhaft wird die Antriebsvorrichtung für Sonnenschutzsysteme eingesetzt. Dort ist das Stellelement von einem Behang gebildet. Die Antriebsvorrichtung kann dabei für Sonnenschutzsysteme aller Art, wie zum Beispiel Jalousien, Rollos, Rollläden oder Markisen eingesetzt werden. Auch kann die erfindungsgemäße Antriebsvorrichtung für aufrollbare Fliegengitter eingesetzt werden.

Ein wesentlicher Vorteil der Erfindung besteht darin, dass die dem Elektromotor zugeordnete Bremse völlig geräuschlos arbeitet. Dies beruht darauf, dass die die Bremswirkung erzeugenden Magnete stets in vorgegebenen Abständen zueinander verlaufen, so dass die Aufnahmen mit den Magneten nie miteinander in Berührung kommen.

Das Grundprinzip der erfindungsgemäßen Bremse besteht darin, dass dieses seine volle Bremswirkung nur im Stillstand des Elektromotors entfaltet, indem durch die Wechselwirkung der magnetisierten Bereiche der Aufnahmen ein Rastmoment generiert wird, das den Elektromotor sicher in seiner Position festhält.

Dabei ist die durch das Rastmoment der magnetisierten Bereiche bewirkte Bremskraft im Stillstand des Elektromotors größer als bei laufendem Elektromotor, wenn die magnetisierten Bereiche der ersten und zweiten Anordnung aneinander vorbeibewegt werden.

Typischerweise ist die Bremskraft der erfindungsgemäßen Bremse bei Stillstand des Elektromotors etwa fünfmal größer als bei Laufen des Elektromotors mit voller Drehzahl.

Durch diese Eigenschaft der erfindungsgemäßen Bremse wird ein energiesparender Betrieb der Antriebsvorrichtung erzielt, da während des Laufs des Elektromotors nur geringe Bremskräfte überwunden werden müssen. Da die Bremskraft der erfindungsgemäßen Bremse bei Stillstand des Elektromotors signifikant erhöht ist und den Elektromotor somit sicher im Stillstand festhält, ist auch eine hohe Funktionssicherheit der Antriebsvorrichtung gewährleistet. Das Überführen des Elektromotors der erfindungsgemäßen Antriebsvorrichtung erfolgt vorteilhaft derart, dass der Elektromotor aktiv stoppbar ist, und dass darauffolgend der Elektromotor durch das Rastmoment der Bremse in einer Rastposition angehalten ist.

Ist beispielsweise der Elektromotor als Gleichstrommotor ausgebildet, so kann dieser durch ein Kurzschließen aktiv gestoppt werden. Ist beispielsweise der Elektromotor als Asynchronmotor ausgebildet, so kann der Elektromotor dadurch aktiv gestoppt werden, dass dieser kurzzeitig in die jeweils andere Drehrichtung angesteuert wird. Die Steuerbefehle werden dabei bevorzugt in einer Steuereinheit generiert, die an den Elektromotor angeschlossen ist.

Generell läuft der Elektromotor nach einem aktiven Stoppbefehl noch solange weiter, bis eine Rastposition der Bremse vorliegt, in der die Magnete der ersten und zweiten Aufnahme relativ zueinander derart angeordnet sind, dass mit diesen das Rastmoment generiert wird.

Um dann den Elektromotor wieder zu starten, muss dieses Rastmoment überwunden werden, so dass beim anschließenden Lauf des Elektromotors die Magnete der Aufnahmen aneinander vorbeibewegt werden und somit die Bremswirkung der Bremse stark reduziert ist, so dass die Bremse den Lauf des Elektromotors nicht nennenswert hemmt.

Ein wesentlicher Vorteil der Erfindung besteht darin, dass die magnetischen Komponenten zur Generierung des Rastmoments einen sehr einfachen, kompakten Aufbau aufweisen, so dass der fertigungstechnische Aufwand zu deren Herstellung und Montage in der Antriebsvorrichtung äußerst gering ist.

Gemäß einer konstruktiv vorteilhaften Ausgestaltung der Erfindung ist die erste Aufnahme von einem auf dem Rotor des Elektromotors gelagerten Innenteil gebildet. Die zweite Aufnahme ist von einem konzentrisch angeordneten Außenteil gebildet.

Vorteilhaft ist das Außenteil an einem Gehäuse des Elektromotors befestigt.

Weiterhin weist das Innenteil eine zentrale Bohrung auf, in welcher der Rotor des Elektromotors gelagert ist.

Insbesondere ist das Innenteil kreisscheibenförmig ausgebildet. Das Außenteil ist ringförmig ausgebildet.

Die so ausgebildete Bremse weist eine kompakte Bauform auf und lässt sich ohne weiteres im Gehäuse des Elektromotors integrieren.

Vorteilhaft weist das Innenteil eine rotationssymmetrische äußere Mantelfläche auf. Das Außenteil weist eine rotationssymmetrische innere Mantelfläche auf, wobei die Mantelflächen konzentrisch und in Abstand zueinander gegenüberliegend angeordnet sind, und wobei im Bereich dieser Mantelfläche die magnetisierten Bereiche angeordnet sind.

Das Innenteil und das Außenteil sind somit durch einen Spalt konstanter Breite getrennt. Das Innenteil ist dadurch reibungsfrei gegenüber dem Außenteil drehbar. Durch die gegenüberliegende Anordnung der magnetisierten Bereiche auf dem Außenteil einerseits und dem Innenteil andererseits wird eine hohe Magnetkraft erzielt, wenn sich die magnetisierten Bereiche in einer Rastposition zueinander befinden.

Gemäß einer vorteilhaften Ausgestaltung sind im Bereich der Mantelfläche Ausnehmungen vorgesehen, in welche Magnete einsetzbar sind.

Die Erfindung wird im Folgenden anhand der Zeichnungen erläutert. Es zeigen:
- Figur 1:: Ausführungsbeispiel der erfindungsgemäßen Antriebsvorrichtung für ein Sonnenschutzsystem.
- Figur 2:: Einzeldarstellung einer nicht beanspruchten Ausführungsform einer Bremse für die Antriebsvorrichtung gemäß Figur 1.
- Figur 3:: Bremse gemäß Figur 2 bei einer Teilbestückung mit Magneten a) in einer Rastposition b) außerhalb einer Rastposition
- Figur 4:: Bremse gemäß Figur 2 bei einer Komplettbestückung mit Magneten in einer Rastposition.
- Figur 5:: Einzeldarstellung einer zweiten Ausführungsform einer Bremse für die Antriebsvorrichtung gemäß Figur 1 mit zwei magnetisierte Bereiche aufweisenden Ringen in einer Rastposition.
- Figur 6:: Bremse gemäß Figur 5 mit den magnetisierten Bereichen der Ringe außerhalb einer Rastposition.
- Figur 7:: Bremse gemäß Figur 5 mit einer Variante von magnetisierten Bereichen in den beiden Ringen.

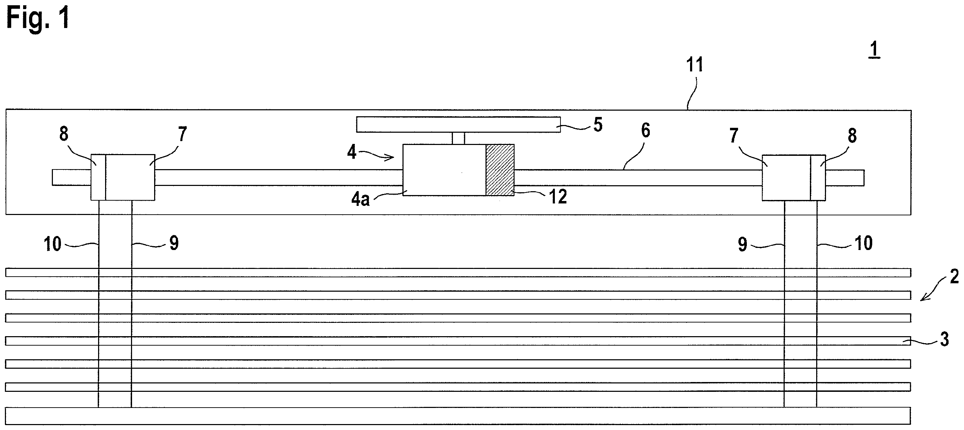

Figur 1 zeigt ein erstes Ausführungsbeispiel der erfindungsgemäßen Antriebsvorrichtung 1 für ein Sonnenschutzsystem. Das Sonnenschutzsystem 1 ist im vorliegenden Fall von einer Jalousie gebildet, mittels derer eine Gebäudeöffnung wie ein Fenster oder eine Tür abgedeckt und gegen Sonneneinstrahlung geschützt werden kann. Generell kann das Antriebssystem auch für andere Stellsysteme insbesondere im Gebäudebereich eingesetzt werden.

Die Jalousie umfasst eine Lamellenanordnung 2 mit einer Anordnung von identisch ausgebildeten, in horizontaler Richtung verlaufenden Lamellen 3. Die Lamellenanordnung 2 kann mittels der Antriebsvorrichtung 1 zwischen einer oberen Endposition, in der die Lamellen 3 komplett eingefahren sind und die Gebäudeöffnung freigeben, und einer unteren Endposition, in der die Lamellenanordnung 2 komplett ausgefahren ist und die Gebäudeöffnung verdeckt, verfahren werden.

Die Antriebsvorrichtung 1 umfasst einen Elektromotor 4, der von einer Steuereinheit 5 gesteuert wird. Die Steuereinheit 5 kann von einem Mikroprozessor oder dergleichen gebildet sein.

Der Elektromotor 4 ist auf einer Welle 6 gelagert. Eine Drehbewegung des Elektromotors 4 wird in eine entsprechende Drehbewegung der Welle 6 um deren Längsachse umgesetzt. An den längsseitigen Enden der Welle 6 befindet sich jeweils eine Aufrollvorrichtung 7 und eine Kippvorrichtung 8. Mit jeder Aufrollvorrichtung 7 ist eine Zugschnur 9, die an der untersten Lamelle 3 befestigt ist, auf- oder abgewickelt, je nachdem in welcher Richtung sich die Welle 6 dreht. Mit jeder Kippvorrichtung 8 ist eine Aufhängeschnur 10 verbunden. Durch Verschieben der Aufhängeschnur 10 mittels der Kippvorrichtung 8 können die Neigungen der Lamellen 3 eingestellt werden.

Die vorgenannten Komponenten des Sonnenschutzsystems sind in einem Kasten 11 integriert.

Die untere Endposition der Lamellenanordnung 2, in der diese komplett ausgefahren ist, kann über die Steuereinheit 5 mittels einer elektronischen oder mechanischen Zählvorrichtung kontrolliert werden.

Zur Überwachung der oberen Endposition, in welcher die Lamellenanordnung 2 vollständig hochgefahren ist, ist ein Endschalter vorgesehen.

Dem Elektromotor 4 ist eine Bremse 12 zugeordnet. Die Bremse 12 ist im Elektromotor 4 integriert und sorgt für ein Rastmoment, wenn sich der Elektromotor 4 im Stillstand befindet.

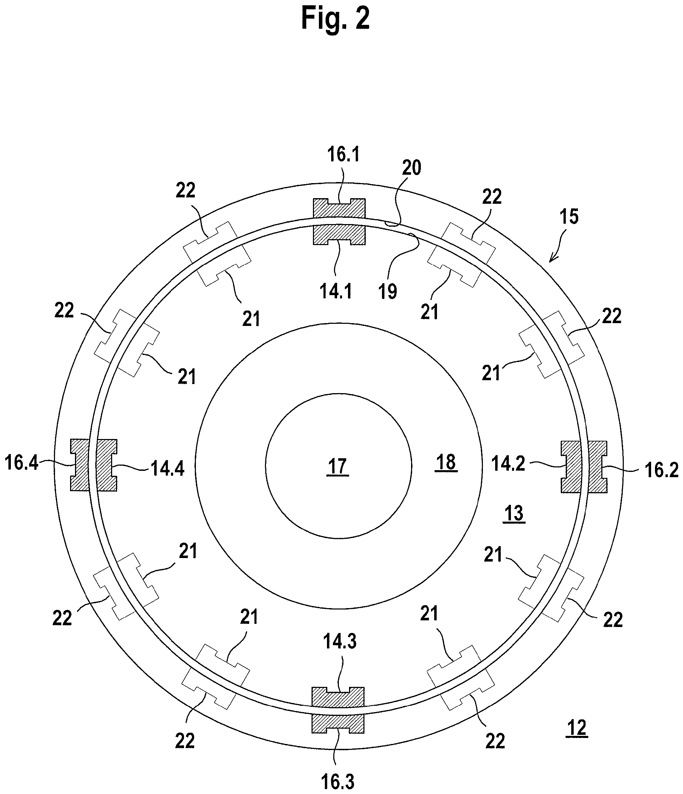

Die einzelnen Komponenten einer ersten Ausführungsform der Bremse 12 sind in Figur 2 dargestellt. Die Bremse 12 weist ein Innenteil 13 auf, das eine Aufnahme für erste Magnete 14.1 bis 14.12 bildet. Weiterhin weist die Bremse 12 ein Außenteil 15 auf, das eine zweite Aufnahme für zweite Magnete 16.1 bis 16.12 bildet.

Das Innenteil 13 ist kreisscheibenförmig ausgebildet und weist eine zentrale Bohrung 17 auf, die den Rotor des Elektromotors 4 aufnimmt. Zur Befestigung ist am Rotor ein Flansch 18 vorgesehen. Damit ist das Innenteil 13 fest mit dem Rotor des Elektromotors 4 verbunden und rotiert mit diesem mit.

Das Außenteil 15 ist ringförmig ausgebildet und an einer (in Figur 2 nicht dargestellten) Innenwand des Gehäuses 4a des Elektromotors 4 angeordnet, so dass das Außenteil 15 stationär angeordnet ist.

Das Innenteil 13 und das Außenteil 15 sind konzentrisch angeordnet, wobei diese Bauteile in einer gemeinsamen Ebene liegen.

Die äußere Mantelfläche 19 des Innenteils 13 verläuft in einem Radius zum Zentrum des Außenteils 15, der geringfügig geringer ist als der Radius der inneren Mantelfläche 20 des Außenteils 15, so dass zwischen diesen Mantelflächen 19, 20 ein schmaler Luftspalt kontanter Breite entsteht.

Wie in Figur 2 dargestellt, weist das Innenteil 13 im Bereich der äußeren Mantelfläche 19 eine Anzahl von identischen Ausnehmungen 21 auf. Im vorliegenden Fall sind zwölf Ausnehmungen 21 vorgesehen, die jeweils um identische Winkel versetzt zueinander angeordnet sind, so dass sie eine drehsymmetrische Anordnung auf dem Innenteil 13 bilden.

Entsprechend weist das Außenteil 15 im Bereich der inneren Mantelfläche 20, 20 eine Anzahl von identischen Ausnehmungen 22 auf. Die Anzahl der Ausnehmungen 22 im Außenteil 15 entspricht der Anzahl der Ausnehmungen 21 des Innenteils 13. Im vorliegenden Fall sind die Ausnehmungen des Außenteils 15 und die Ausnehmungen 21 des Innenteils 13 identisch ausgebildet.

In jede der Ausnehmungen 21, 22 ist wahlweise ein Magnet 14.1-14.12 beziehungsweise 16.1-16.12 einsetzbar. Durch die Stärken der Magnete 14.1-14.12 beziehungsweise 16.1-16.12 und die Anzahl von in Ausnehmungen 21, 22 eingesetzten Magneten 14.1-14.12 beziehungsweise 16.1-16.12 ist die Höhe des mit der Bremse 12 generierten Rastmoments einstellbar.

Die erfindungsgemäße Bremse 12 wirkt nur im Stillstand des Elektromotors 4, wobei mit der Bremse 12 das erforderliche Rastmoment zum sicheren Anhalten des Elektromotors 4 dann erzeugt, wenn sich das Innenteil 13 relativ zum Außenteil 15 in einer Rastposition befindet, in welcher jeweils ein Magnet 14.1 bis 14.12 des Innenteils 13 exakt einem Magneten 16.1 bis 16.12 des Außenteils 15 gegenüberliegt.

Bei der Anordnung gemäß Figur 2 weist das Innenteil 13 vier jeweils um 90° gegeneinander versetzte Magnete 14.1 bis 14.4 auf, die in Ausnehmungen 21 eingesetzt sind. Entsprechend weist das Außenteil 15 vier jeweils um 90° gegeneinander versetzte Magnete 16.1 bis 16.4 auf, die in Ausnehmungen 22 eingesetzt sind.

Figur 2 zeigt eine erste Rastposition in der der Magnet 14.1 des Innenteils 13 dem Magnet 16.1 gegenüberliegt. Entsprechend sind die Magnete 14.2 und 16.2, 14.3 und 16.3 sowie 14.4 und 16.4 gegenüberliegend angeordnet, so dass mit diesen das Rastmoment erzeugt wird.

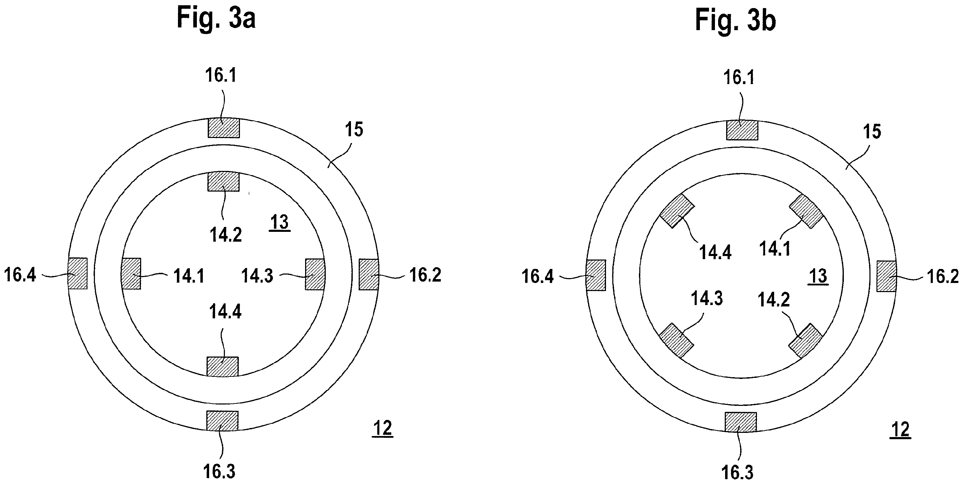

Figur 3a zeigt die Anordnung gemäß Figur 3, bei welcher das Innenteil 13 um 90° weiter gedreht ist. Auch dann wird eine Rastposition erhalten, da nun die Magnete 14.2 und 16.1 gegenüberliegend angeordnet sind. Entsprechend sind die Magnete 14.3 und 16.2, 14.4 und 16.3 sowie 14.1 und 16.4 gegenüberliegend angeordnet. Bei dieser Anordnung wird dasselbe Rastmoment erzeugt wie bei der Anordnung gemäß Figur 2.

Figur 3b zeigt die Anordnung gemäß Figur 2, wobei nun das Innenteil 13 um 45° weitergedreht wurde, so dass die Magnete 14.1 bis 14.4 nicht mehr den Magneten 16.1 bis 16.4 gegenüberliegend angeordnet, sondern versetzt zu diesen angeordnet sind. In diesem Fall wird mit der Bremse 12 kein Rastmoment generiert.

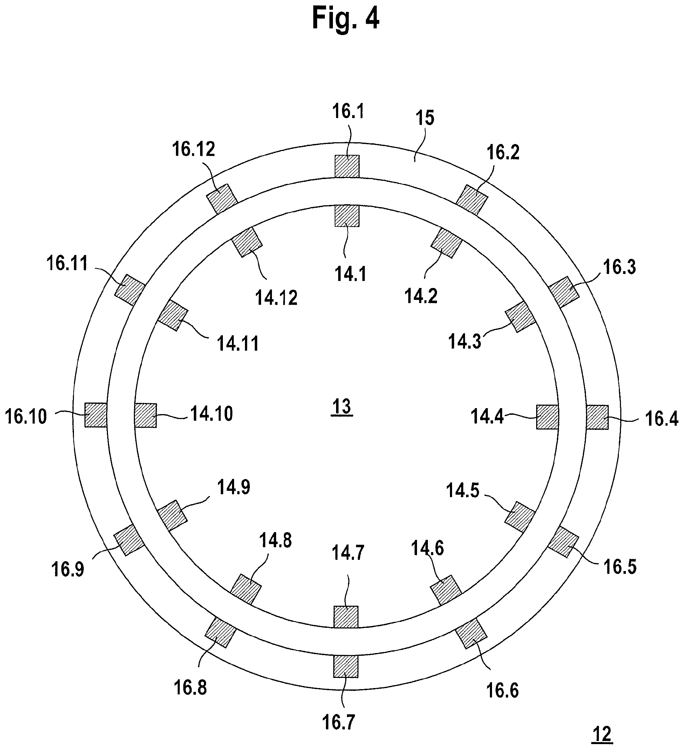

Figur 4 zeigt die Bremse 12 der Figur 2 für den Fall, dass alle Ausnehmungen 21 des Innenteils 13 mit Magneten 14.1 bis 14.12 und alle Ausnehmungen 22 des Außenteils 15 mit Magneten 16.1 bis 16.12 bestückt sind. Dabei zeigt Figur 4 wieder eine Rastposition der Bremse 12, bei welcher die Magnete 14.1 und 16.1 sowie alle weiteren Paare von Magneten 14.2, 16.2 bis 14.12, 16.12 gegenüberliegend angeordnet sind. Da im Vergleich zur Anordnung von Figur 2 dreimal so viele Magnete 14.1-14.12 und 16.1-16.12 eingesetzt werden, ist nunmehr das Rastmoment auch dreimal so hoch.

Wird bei Verfahren der Jalousie der Elektromotor 4 mit einer Arbeitsdrehzahl, vorzugsweise mit voller Drehzahl, betrieben, so werden die Magnete 14.1 und 16.1 der Bremse 12 rasch aneinander vorbeibewegt, so dass die Bremswirkung der Bremse 12 sehr klein ist und den Lauf des Elektromotors 4 nicht nennenswert hemmt.

Zur Einleitung eines Bremsvorgangs generiert die Steuereinheit 5 einen Bremsbefehl, so dass der Elektromotor 4 aktiv gestoppt wird. Das aktive Stoppen kann bei einem als Gleichstrommotor ausgebildeten Elektromotor 4 durch ein Kurzschließen erfolgen. Bei einem Elektromotor 4 in Form eines Asynchronmotors erfolgt das aktive Stoppen dadurch, dass die Drehzahl des Elektromotors 4 kurzzeitig umgekehrt wird.

Durch den aktiven Stoppbefehl wird der Elektromotor 4 angehalten, wobei dieser noch so weit ausläuft, bis die Bremse 12 in einer Rastposition liegt und so ein Rastmoment generiert, das ein Weiterlaufen des Elektromotors 4 verhindert. Im Stillstand des Elektromotors 4 ist die durch das Rastmoment ausgeübte Bremskraft der Bremse 12 erheblich höher als wenn der Elektromotor 4 bei hoher Drehzahl betrieben ist und sich die Magnete 14.1-14.12 und 16.1-16.12 der Bremse 12 schnell aneinander vorbeibewegen.

Zum Wiederanlauf des Elektromotors 4 wird dieser kurzfristig mit erhöhter Leistung betrieben, so dass er das Rastmoment überwinden kann.

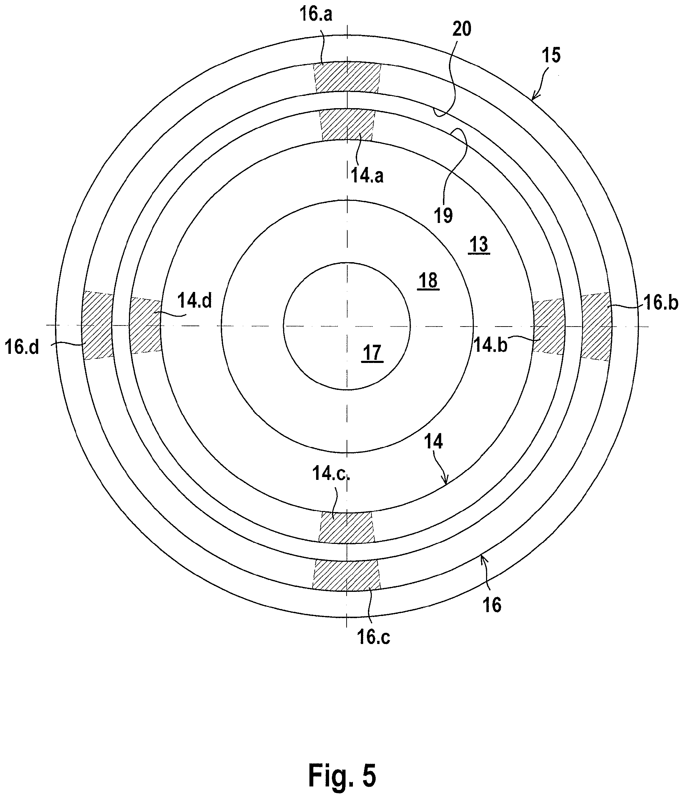

Figur 5 zeigt eine weitere Ausführungsform der erfindungsgemäßen Bremse 12. Die Bremse 12 weist wieder ein Innenteil 13 auf, das eine Aufnahme für einen ersten Ring 14 bildet. Der Ring 14 ist mit nicht dargestellten Befestigungsmitteln wie Rastmitteln oder dergleichen in einer definierten Sollposition in dem Innenteil 13 gelagert. Der Ring 14 besteht aus magnetisierbarem Material. Der Ring 14 ist lokal derartig magnetisiert, dass dieser vier identische, um 90° in Umfangsrichtung versetzte, magnetisierte, Bereiche 14.a-14.d aufweist, die durch nicht magnetisierte Bereiche getrennt sind.

Weiterhin weist die Bremse 12 wieder ein Außenteil 15 auf, das eine Aufnahme für einen zweiten Ring 16 bildet. Der zweite Ring 16 ist mit nicht dargestellten Befestigungsmitteln wie Rastmitteln oder dergleichen in einer definierten Sollposition im Außenteil 15 gelagert. Auch der zweite Ring 16 besteht aus magnetisierbarem Material. Der zweite Ring 16 ist lokal derartig magnetisiert, dass dieser vier identische, um 90° in Umfangsrichtung versetzte, magnetisierte, Bereiche 16.a-16.d aufweist, die durch nicht magnetische Bereiche getrennt sind. Die Größen der magnetisierten Bereiche 16.a-16.d des zweiten Ringes 16 sind an die Größen der magnetisierten Bereiche 14.a-14.d des ersten Ringes 14 angepasst.

Auf eine Welle 17 des Rotors des Elektromotors ist ein Ritzel 18 gesteckt. Mit diesem Ritzel 18 ist das Innenteil 13 im Gehäuse des Elektromotors 4 drehbar gelagert. Damit ist das Innenteil 13 fest mit dem Rotor des Elektromotors 4 verbunden und rotiert mit diesem mit.

Das Innenteil 13 ist kreisscheibenförmig ausgebildet und weist eine zentrale Bohrung 17 auf, die den Rotor des Elektromotors 4 aufnimmt. Zur Befestigung ist am Rotor ein Flansch 18 vorgesehen. Damit ist das Innenteil 13 fest mit dem Rotor des Elektromotors 4 verbunden und rotiert mit diesem mit.

Das Außenteil 15 ist ringförmig ausgebildet und an einer (nicht dargestellten) Innenwand des Gehäuses 4a des Elektromotors 4 angeordnet, so dass das Außenteil 15 stationär angeordnet ist.

Das Innenteil 13 und das Außenteil 15 sind konzentrisch angeordnet, wobei diese Bauteile in einer gemeinsamen Ebene liegen.

Die äußere Mantelfläche 19 des Innenteils 13 verläuft in einem Radius zum Zentrum des Außenteils 15, der geringfügig geringer ist als der Radius der inneren Mantelfläche 20 des Außenteils 15, so dass zwischen diesen Mantelflächen 19, 20 ein schmaler Luftspalt kontanter Breite entsteht.

Die erfindungsgemäße Bremse 12 wirkt nur im Stillstand des Elektromotors 4, wobei mit der Bremse 12 das erforderliche Rastmoment zum sicheren Anhalten des Elektromotors 4 dann erzeugt wird, wenn sich das Innenteil 13 relativ zum Außenteil 15 in einer Rastposition befindet, in welcher jeweils ein magnetisierter Bereich 14.a-14.d des Innenteils 13 exakt einem magnetisierten Bereich 16.a-16.d des Außenteils 15 gegenüberliegt.

Figur 5 zeigt eine erste Rastposition in der der magnetisierte Bereich 14.a des Innenteils 13 dem magnetisierten Bereich 16.a gegenüberliegt. Entsprechend sind die magnetisierten Bereiche 14.b und 16.b, 14.c und 16.c sowie 14.d und 16.d gegenüberliegend angeordnet, so dass mit diesen das Rastmoment erzeugt wird. Entsprechende Rastpositionen werden erhalten, wenn das Innenteil 13 um 90°, 180° oder 270° bezüglich der Anordnung von Figur 5 weitergedreht ist.

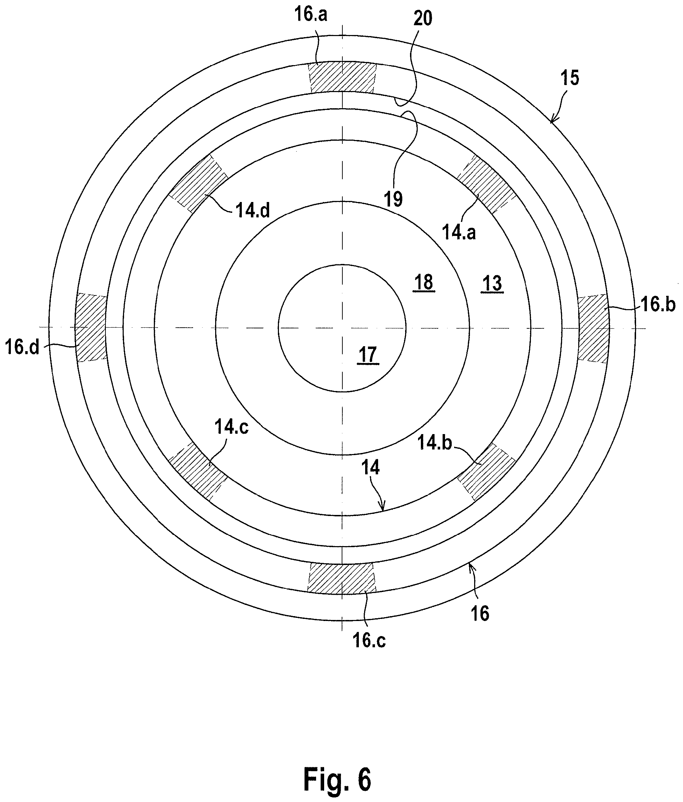

Figur 6 zeigt die Anordnung gemäß Figur 5, wobei nun das Innenteil 13 um 45° weitergedreht wurde, so dass die magnetisierten Bereiche 14.a-14.d nicht mehr den magnetisierten Bereichen 16.a-16.d gegenüberliegend angeordnet, sondern versetzt zu diesen angeordnet sind. In diesem Fall wird mit der Bremse 12 kein Rastmoment generiert.

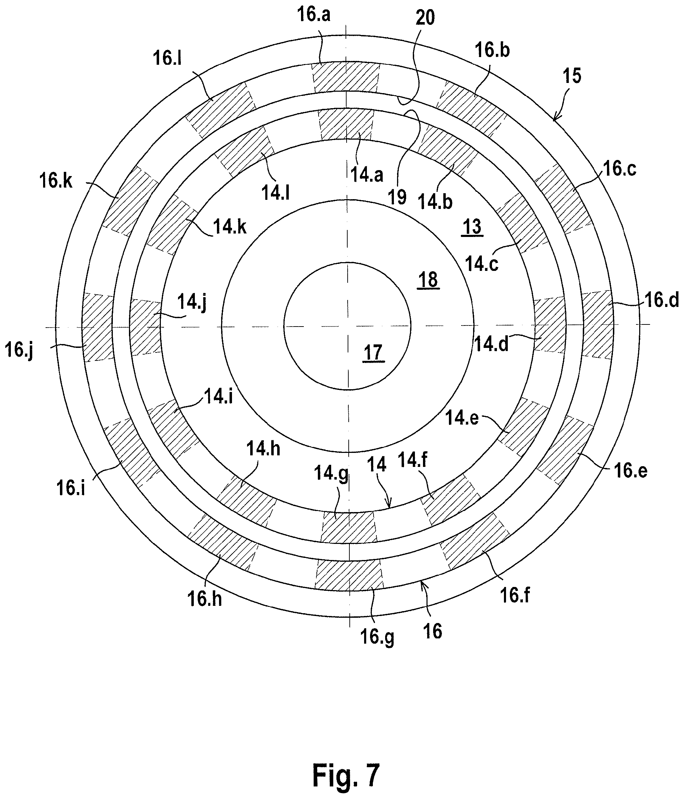

Figur 7 zeigt die Bremse 12 der Figur 5 für den Fall, dass der erste Ring 14 so magnetisiert ist, dass dieser zwölf identische, jeweils um 30° in Umfangsrichtung versetzte, magnetisierte, Bereiche 14.a-14.1 aufweist. Entsprechend ist der zweite Ring 16 so magnetisiert, dass dieser zwölf identische, jeweils um 30° in Umfangsrichtung versetzte magnetisierte Bereiche 16.a-16.1 aufweist, deren Größen den magnetisierten Bereichen 14.a-14.1 des ersten Ringes 14 entsprechen. Dabei zeigt Figur 7 wieder eine Rastposition der Bremse 12, bei welcher die magnetisierten Bereiche 14.a-16.a sowie alle weiteren Paare von magnetisierten Bereichen 14.b, 16.b bis 14.1, 16.1 gegenüberliegend angeordnet sind. Da im Vergleich zur Anordnung von Figur 2 dreimal so viele magnetisierte Bereiche 14.a-14.1 und 16.a-16.1 eingesetzt werden, ist nunmehr das Rastmoment entsprechend höher.

Wird bei Verfahren der Jalousie der Elektromotor 4 mit einer Arbeitsdrehzahl, vorzugsweise mit voller Drehzahl, betrieben, so werden die magnetisierten Bereiche 14.a-14.1 und 16.a-16.1 der Bremse 12 rasch aneinander vorbeibewegt, so dass die Bremswirkung der Bremse 12 sehr klein ist und den Lauf des Elektromotors 4 nicht nennenswert hemmt.

Zur Einleitung eines Bremsvorgangs generiert die Steuereinheit 5 einen Bremsbefehl, so dass der Elektromotor 4 aktiv gestoppt wird. Das aktive Stoppen kann bei einem als Gleichstrommotor ausgebildeten Elektromotor 4 durch ein Kurzschließen erfolgen. Bei einem Elektromotor 4 in Form eines Asynchronmotors erfolgt das aktive Stoppen dadurch, dass die Drehzahl des Elektromotors 4 kurzzeitig umgekehrt wird.

Durch den aktiven Stoppbefehl wird der Elektromotor 4 angehalten, wobei dieser noch so weit ausläuft, bis die Bremse 12 in einer Rastposition liegt und so ein Rastmoment generiert, das ein Weiterlaufen des Elektromotors 4 verhindert. Im Stillstand des Elektromotors 4 ist die durch das Rastmoment ausgeübte Bremskraft der Bremse 12 erheblich höher als wenn der Elektromotor 4 bei hoher Drehzahl betrieben ist und sich die magnetisierten Bereiche 14.a-14.1 und 16.a-16.1 der Bremse 12 schnell aneinander vorbeibewegen.

Zum Wiederanlauf des Elektromotors 4 wird dieser kurzfristig mit erhöhter Leistung betrieben, so dass er das Rastmoment überwinden kann.

Die Höhe des Rastmoments ist durch eine geeignete Wahl der Anzahlen und Größen der magnetisierten Bereiche 14.a-14.1 und 16.a-16.1 in beiden Ringen 14, 16 einstellbar.

### Bezugszeichenliste

- (1): Antriebsvorrichtung
- (2): Lamellenanordnung
- (3): Lamelle
- (4): Elektromotor
- (5): Steuereinheit
- (6): Welle
- (7): Aufrollvorrichtung
- (8): Kippvorrichtung
- (9): Zugschnur
- (10): Aufhängeschnur
- (11): Kasten
- (12): Bremse
- (13): Innenteil
- (14): Ring
- (14.1-14.12): Magnet
- (14.a-14.1): magnetisierter Bereich
- (15): Außenteil
- (16): Ring
- (16.1-16.12): Magnet
- (16.a-16.1): magnetisierter Bereich
- (17): Bohrung
- (18): Flansch
- (19,20): Mantelfläche
- (21,22): Ausnehmung

## Patentansprüche

1. Antriebsvorrichtung (1) für ein Stellsystem, mit einem Elektromotor (4), wobei durch eine Drehbewegung dessen Rotors ein Stellelement ein- oder ausgefahren wird, und mit einer dem Elektromotor (4) zugeordneten Bremse (12), wobei die Bremse (12) eine mit dem Rotor des Elektromotors (4) mitrotierende erste Aufnahme mit einem ersten Ring (14) aus magnetisierbarem Material aufweist, wobei dieser erste Ring (14) eine erste Anordnung von in dessen Umfangsrichtung beabstandeten, diskreten magnetisierten Bereichen (14.a-14.1) aufweist, und eine stationäre zweite Aufnahme mit einem zweiten Ring (16) aus magnetisiertem Material aufweist, wobei dieser zweite Ring (16) eine zweite Anordnung von in dessen Umfangsrichtung beabstandeten, diskreten magnetisierten Bereichen 16.a-16.1 aufweist, wobei bei Stillstand des Elektromotors (4) magnetisierte Bereiche (14.a-14.1 und 16.a-16.1) der ersten und zweiten Aordnung in Abstand gegenüberliegend angeordnet sind und damit ein Rastmoment für den Elektromotor (4) generieren, dass die Höhe des Rastmoments durch die Anzahl und die Größen der magnetisierten Bereiche (14.a-14.1 und 16.a-16.1) in den Ringen (14, 16) vorgebbar ist.

2. Antriebsvorrichtung nach Anspruch 1, **dadurch gekennzeichnet, dass** die durch das Rastmoment der magnetisierten Bereiche (14.a-14.1 und 16.a-16.1) bewirkte Bremskraft im Stillstand des Elektromotors (4) größer ist als bei laufendem Elektromotor (4), wenn die magnetisierten Bereiche (14.a-14.1 und 16.a-16.1) der ersten und zweiten Anordnung aneinander vorbeibewegt werden.

3. Antriebsvorrichtung nach einem der Ansprüche 1 oder 2, **dadurch gekennzeichnet, dass** die Ringe (14, 16) konzentrisch angeordnet sind.

4. Antriebsvorrichtung nach einem der Ansprüche 1 bis 3, **dadurch gekennzeichnet, dass** die Größen der magnetisierten Bereiche (14.a-14.1) des ersten Rings (14) den Größen der magnetisierten Bereiche (16.a-16.1) des zweiten Rings (16) zumindest näherungsweise entsprechen.

5. Antriebsvorrichtung nach einem der Ansprüche 1 bis 4, **dadurch gekennzeichnet, dass** die Anzahl der magnetisierten Bereiche (14.a-14.1) des ersten Rings (14) der Anzahl der magnetisierten Bereiche (16.a-16.1) des zweiten Rings (16) entspricht.

6. Antriebsvorrichtung nach einem der Ansprüche 1 bis 5, **dadurch gekennzeichnet, dass** die erste Aufnahme von einem auf dem Rotor des Elektromotors (4) gelagerten Innenteil (13) gebildet ist, und dass die zweite Aufnahme von einem konzentrisch angeordneten Außenteil (15) gebildet ist.

7. Antriebsvorrichtung nach Anspruch 6, **dadurch gekennzeichnet, dass** das Außenteil (15) an einem Gehäuse des Elektromotors (4) befestigt ist.

8. Antriebsvorrichtung nach einem der Ansprüche 6 oder 7, **dadurch gekennzeichnet, dass** das Innenteil (13) eine rotationssymmetrische äußere Mantelfläche (19) aufweist und dass das Außenteil (15) eine rotationssymmetrische innere Mantelfläche (20) aufweist, wobei die Mantelflächen (19, 20) konzentrisch und in Abstand zueinander gegenüberliegend angeordnet sind, und wobei im Bereich dieser Mantelflächen (19, 20) die Ringe mit den magnetisierten Bereichen (14.a-14.1 und 16.a-16.1) angeordnet sind.

9. Antriebsvorrichtung nach Anspruch 8, **dadurch gekennzeichnet, dass** das Innenteil (13) kreisscheibenförmig ausgebildet ist, und dass das Außenteil (15) ringförmig ausgebildet ist.

10. Antriebsvorrichtung nach einem der Ansprüche 1 bis 9, **dadurch gekennzeichnet, dass** der Elektromotor (4) aktiv stoppbar ist, und dass darauffolgend der Elektromotor (4) durch das Rastmoment der Bremse (12) in einer Rastposition angehalten ist.

11. Antriebsvorrichtung nach Anspruch 10, **dadurch gekennzeichnet, dass** der Elektromotor (4) ein Gleichstrommotor ist, und durch einen Kurzschluss gestoppt ist.

12. Antriebsvorrichtung nach einem der Ansprüche 10 oder 11, **dadurch gekennzeichnet, dass** der Elektromotor (4) ein Asynchronmotor ist, und dass der in eine Drehrichtung laufende Asynchronmotor dadurch gestoppt ist, dass dieser kurzzeitig in die jeweils andere Drehrichtung angesteuert ist.

13. Antriebsvorrichtung nach einem der Ansprüche 1 bis 12, **dadurch gekennzeichnet, dass** der Elektromotor (4) von einer Steuereinheit (5) gesteuert ist.

14. Antriebsvorrichtung nach einem der Ansprüche 1 bis 13, **dadurch gekennzeichnet, dass** das Stellsystem ein Sonnenschutzsystem ist, bei welchem als Stellelement ein Behang ein- oder ausgefahren wird.

## Claims

1. Drive device (1) for a setting system, with an electric motor (4), wherein a setting element is retractable or extensible by a rotational movement of the rotor of the electric motor, and with a brake (12) associated with the electric motor (4), wherein the brake (12) comprises a first mount, which co-rotates with the rotor of the electric motor (4), with a first ring (14) of magnetisable material, wherein this first ring (14) has a first arrangement of discrete magnetised regions (14.a - 14.1) spaced in the circumferential direction of the ring, and a stationary second mount with a second ring (16) of magnetised material, wherein this second ring (16) has a second arrangement of discrete magnetised regions (16.1 - 16.1) spaced in the circumferential direction of the ring, wherein at standstill of the electric motor (4) magnetised regions (14.a - 14.1 and 16.a - 16.1) of the first and second arrangements are arranged opposite one another at a spacing and thus generate a detent torque for the electric motor (4), and the level of the detent torque is predeterminable by the number and sizes of the magnetised regions (14.a - 14.1 and 16.a - 16.1) in the rings (14, 16).

2. Drive device according to claim 1, **characterised in that** the braking force, which is produced by the detent torque of the magnetised regions (14.a - 14.1 and 16.a - 16.1), at standstill of the electric motor (4) is greater than when the electric motor (4) is running, when the magnetised regions (14.a - 14.1 and 16.a - 16.1) of the first and second arrangements are moved past one another.

3. Drive device according to one of claims 1 and 2, **characterised in that** that the rings (14, 16) are arranged concentrically.

4. Drive device according to any one of claims 1 to 3, **characterised in that** the sizes of the magnetised regions (14.a - 14.1) of the first ring (14) correspond at least approximately with the sizes of the magnetised regions (16.a - 16.1) of the second ring (16).

5. Drive device according to any one of claims 1 to 4, **characterised in that** the number of magnetised regions (14.a - 14.1) of the first ring (14) corresponds with the number of magnetised regions (16.a - 16.1) of the second ring (16).

6. Drive device according to any one of claims 1 to 5, **characterised in that** the first mount is formed by an inner part (13) mounted on the rotor of the electric motor (4) and the second mount is formed by a concentrically arranged outer part (15).

7. Drive device according to claim 6, **characterised in that** the outer part (15) is secured to a housing of the electric motor (4).

8. Drive device according to one of claims 6 and 7, **characterised in that** the inner part (13) has a rotationally symmetrical outer circumferential surface (19) and the outer part (15) has a rotationally symmetrical inner circumferential surface (20), wherein the circumferential surfaces (19, 20) are arranged concentrically and opposite one another at a spacing and wherein the rings with the magnetised regions (14.a - 14.1 and 16.a - 16.1) are arranged in the region of the circumferential surfaces (19, 20).

9. Drive device according to claim 8, **characterised in that** the inner part (13) is discoid and the outer part (15) is annular.

10. Drive device according to any one of claims 1 to 9, **characterised in that** the electric motor (4) is actively stoppable and subsequently the electric motor (4) is arrested in a detent position by the detent torque of the brake (12).

11. Drive device according to claim 10, **characterised in that** the electric motor (4) is a direct current motor and is stopped by a short-circuit.

12. Drive device according to one of claims 10 and 11, **characterised in that** the electric motor (4) is an asynchronous motor and the asynchronous motor running in a rotational direction is stopped **in that** this is transiently activated in the respective other rotational direction.

13. Drive device according to any one of claims 1 to 12, **characterised in that** the electric motor (4) is controlled by a control unit (5).

14. Drive device according to any one of claims 1 to 13, **characterised in that** the setting system is a sunshade system in which a curtain is retracted or extended as setting element.

## Revendications

1. Dispositif d'entraînement (1) pour un système de réglage, comprenant un moteur électrique (4), un élément de réglage étant rentré ou sorti par un mouvement de rotation de son rotor, et comprenant un frein (12) associé au moteur électrique (4), le frein (12) possédant un premier logement pourvu d'une première bague (14) en matériau magnétisable qui suit la rotation du rotor du moteur électrique (4), cette première bague (14) possédant un premier arrangement de zones magnétisées (14.a-14.1) discrètes espacées dans la direction de sa périphérie, et un deuxième logement pourvu d'une deuxième bague (16) en matériau magnétisable, cette deuxième bague (16) possédant un deuxième arrangement de zones magnétisées (16.a-16.1) discrètes espacées dans la direction de sa périphérie, lors de l'arrêt du moteur électrique (4), les zones magnétisées (14.a-14.1 et 16.a-16.1) du premier et du deuxième arrangement étant disposées en vis-à-vis les unes des autres et générant ainsi un couple de crantage pour le moteur électrique (4), le niveau du couple de crantage pouvant être prédéfini par le nombre et les tailles des zones magnétisées (14.a-14.1 et 16.a-16.1) dans les bagues (14, 16) .

2. Dispositif d'entraînement selon la revendication 1, **caractérisé en ce que** la force de freinage provoquée par les zones magnétisées (14.a-14.1 et 16.a-16.1) à l'arrêt du moteur électrique (4) est supérieure à celle lorsque le moteur électrique (4) est en rotation, lorsque les zones magnétisées (14.a-14.1 et 16.a-16.1) du premier et du deuxième arrangement sont déplacées pour passer les unes en face des autres.

3. Dispositif d'entraînement selon la revendication 1 ou 2, **caractérisé en ce que** les bagues (14, 16) sont disposées de manière concentrique.

4. Dispositif d'entraînement selon l'une des revendications 1 à 3, **caractérisé en ce que** les tailles des zones magnétisées (14.a-14.1) de la première bague (14) correspondent au moins approximativement aux tailles des zones magnétisées (16.a-16.1) de la deuxième bague (16) .

5. Dispositif d'entraînement selon l'une des revendications 1 à 4, **caractérisé en ce que** le nombre de zones magnétisées (14.a-14.1) de la première bague (14) correspond au nombre de zones magnétisées (16.a-16.1) de la deuxième bague (16).

6. Dispositif d'entraînement selon l'une des revendications 1 à 5, **caractérisé en ce que** le premier arrangement est formé par une partie interne (13) montée sur le rotor du moteur électrique (4), et **en ce que** le deuxième arrangement est formé par une partie externe (15) disposée de manière concentrique.

7. Dispositif d'entraînement selon la revendication 6, **caractérisé en ce que** la partie externe (15) est fixée à un carter du moteur électrique (4).

8. Dispositif d'entraînement selon l'une des revendications 6 ou 7, **caractérisé en ce que** la partie interne (13) possède une enveloppe externe (19) à symétrie rotationnelle et **en ce que** la partie externe (15) possède une enveloppe interne (20) à symétrie rotationnelle, les enveloppes (19, 20) étant disposées de manière concentrique et en vis-à-vis espacées l'une de l'autre, et les bagues pourvues des zones magnétisées (14.a-14.1 et 16.a-16.1) étant disposées dans la zone de ces enveloppes (19, 20).

9. Dispositif d'entraînement selon la revendication 8, **caractérisé en ce que** la partie interne (13) est réalisée en forme de disque circulaire et **en ce que** la partie externe (15) est réalisée en forme de bague.

10. Dispositif d'entraînement selon l'une des revendications 1 à 9, **caractérisé en ce que** le moteur électrique (4) peut être stoppé activement, et **en ce que** suite à cela, le moteur électrique (4) est maintenu dans une position de crantage par le couple de crantage du frein (12).

11. Dispositif d'entraînement selon la revendication10, **caractérisé en ce que** le moteur électrique (4) est un moteur à courant continu et il est stoppé par un court-circuit.

12. Dispositif d'entraînement selon l'une des revendications 10 ou 11, **caractérisé en ce que** le moteur électrique (4) est un moteur asynchrone et **en ce que** le moteur asynchrone qui tourne dans un sens de rotation est stoppé en excitant celui-ci brièvement dans l'autre sens de rotation respectif.

13. Dispositif d'entraînement selon l'une des revendications 1 à 12, **caractérisé en ce que** le moteur électrique (4) est commandé par une unité de commande (5) .

14. Dispositif d'entraînement selon l'une des revendications 1 à 13, **caractérisé en ce que** le système de réglage est un système de protection solaire avec lequel l'élément de réglage qui est rentré ou sorti est un rideau.
